# EUROPEAN PATENT SPECIFICATION

(11) **EP 3 654 748 B1**
(45) Date of publication and mention of the grant of the patent: **25.05.2022**
(21) Application number: 18737424.4
(22) Date of filing: 02.07.2018
(51) Int. Cl.: A01C 7/04, A01C 7/10

(54) **IMPROVED MATERIAL DISPENSING DEVICE FOR AGRICULTURAL MACHINERY AND METHOD OF OPERATION**
VERBESSERTE MATERIALABGABEEINRICHTUNG FÜR LANDWIRTSCHAFTLICHE MASCHINEN UND BETRIEBSVERFAHREN
DISPOSITIF DE DISTRIBUTION DE MATÉRIAU AMÉLIORÉ POUR MACHINES AGRICOLES ET PROCÉDÉ D'OPÉRATION

(30) Priority: 19.07.2017 IT 201700082091
(43) Date of publication of application: 27.05.2020
(73) Proprietor: Matermacc S.p.A., 33078 San Vito al Tagliamento (PN) (IT)
(72) Inventor: BRAGATTO, Enrico, 30021 Caorle (VE) (IT)
(74) Representative: Petraz, Gilberto Luigi
(86) International application number: PCT/IB2018/054892
(87) International publication number: WO 2019/016633

(56) References cited:
- EP-A1- 1 637 026
- EP-A1- 2 047 735
- WO-A1-2017/068458
- DE-A1- 19 845 860
- US-A1- 2016 366 814

## Description

### TECHNICAL FIELD

This invention relates to a dispensing device for agricultural machinery that dispenses granular material, and, in particular, seeds in soil.

### PRIOR ART

Precision sowing machines are known in the art that drop seeds in the soil to be cultivated one at a time and maintain the spacing between two seeds planted in the soil constant.

This serves to allow the plants to grow at an equal distance apart so that each plant has an adequate amount of soil for its growth.

Precision sowing machines comprise at least one planting unit supported by a frame that rests on the ground via at least one wheel and is connected to a tractor for pulling the sowing machine itself.

The planting unit comprises at least one dispensing device provided with a chamber that has an inlet and an outlet for the seeds to be dispensed and is fluidly connected to a vacuum unit that generates negative pressure inside the chamber itself.

The chamber houses a dispensing element that receives the material, or rather the seed, as a result of the negative pressure, and transports it from the inlet to the outlet of the chamber until it releases it in a conveyor duct that takes it in the vicinity of the soil on which it must be dropped.

Inside said chamber, there is also a seed selector element that is configured to detach an excessive amount of seeds from the dispensing element that due to the negative pressure may adhere to the dispensing element and be carried out along with it towards the outlet.

To ensure proper operation, the position of said selector element must be varied based on seed type, seed lot and moisture in the air because these factors affect the size of the granular body to be detached and, therefore, the distance from the dispensing element at which to set the selector element so that excess seeds can be effectively removed.

In an embodiment, manual selection of the position of the selector element is possible by performing a manual calibration before seed-time.

Such calibration is very approximate and must be repeated every time that the above-mentioned parameters change, thereby forcing a stop in the sowing operation. Furthermore, it does not take account of unexpected seed size variations which are likely, for example, in a non-uniform seed lot. DE19845860 A1 and US 2016/366814 A1 both disclose dispensing units comprising an actuator which permits to remotely adjust the position of the selector element. WO 2017/068458 A1 discloses a dispensing unit comprising an adjustable selector element similar to the embodiment disclosed herein.

It's a purpose of the invention to provide a dispensing unit having an improved actuator of the selector element with respect to the prior art actuators. Such purpose is achieved by the characteristics of the invention set forth in the independent claim. The dependent claims outline preferred and/or particularly advantageous aspects of the invention.

### DISCLOSURE OF INVENTION

The invention particularly provides a dispensing device that dispenses granular material and which comprises: a casing that defines a chamber having an inlet and an outlet for the granular material that is to be dispensed; a dispensing element, which is rotatably associated to the casing in relation to an axis of rotation and housed in the chamber in such a way that a first compartment wherein the material that is to be dispensed is contained and which is in communication with the inlet and outlet is defined in said chamber. Said dispensing element comprising an opening, which is eccentric in relation to the axis of rotation, that puts the first compartment in communication with a second compartment and to which a quantity of granular material adheres by way of a difference between the pressure values in the first and in the second compartment; a selector assembly housed in the first compartment that comprises a selector element, which is movable between a first position, wherein the selector element is far away from the opening, and a second position, wherein a portion of the selector element at least partially overlaps the opening, wherein the selector assembly also comprises an actuator, capable of placing the selector element in any position between the first position and the second position, including the two extremes, and a control unit configured to activate the actuator.

As a result of this solution, a dispensing device is provided that can dispense one seed at a time regardless of seed type, seed lot, and environmental conditions, such as, for example, the level of humidity in the air. Moreover, with this solution there is no need to stop the sowing operation to calibrate the dispensing device.

The control unit can preferably be configured to activate the actuator according to the signal generated by a sensor capable of detecting the quantity of granular material exiting the chamber.

In another aspect of the invention, the selector element is hinged to the casing, the axis of the hinge being parallel to the axis of rotation.

This embodiment of the selector assembly is more economical and efficient than with the use of linear guides, such as, for example, prismatic guides, which could also get jammed more easily due to the build-up of dust and debris in between the parts that slide in a reciprocal motion.

In a further aspect of the invention, the actuator drives a pin, which is slidingly fitted into a through hole made in the selector element and having an elongated cross-section, along a sliding axis parallel to a longitudinal axis of the through hole and perpendicular to the axis of the hinge.

In this way, actuation of the selector element is robust and effective. According to another aspect of the invention, the actuator comprises an electric motor, an output shaft of which rotates integrally with the pin whose longitudinal axis is located parallel and eccentric to an axis of the output shaft. In this way, actuation of the selector element is especially compact and space-saving.

Advantageously, the actuator, or rather, the electric motor, is rigidly connected to the casing.

According to yet another aspect of the invention, the selector element can have a contact surface of the granular material capable of overlapping the opening, which features a serrated edge, at least partially.

Such a solution makes the detachment of excess seeds from the dispensing element easier.

For example, the sensor can comprise a photocell.

In this way, the sensor is particularly robust, economical and effective. According to another aspect of the invention, the dispensing element can comprise a unit configured to generate a difference between the pressure values in the first and second compartments.

The unit can preferably be a vacuum unit configured to generate a negative pressure in the second compartment of the chamber.

Additionally, the invention provides a method of operation of a granular material dispensing device comprising the following steps:
- feeding the granular material in the dispensing device;
- starting up the dispensing element and generating a difference in pressure between the first and second compartments in order to cause the granular material to adhere to the opening of the dispensing element;
- via the sensor, measuring the quantity of granular material exiting the chamber in a certain time interval;
- comparing the measured quantity of granular material against a pre-set threshold value;
- moving the selector element by a predetermined quantity towards the second position if the measured value exceeds the threshold value;
- moving the selector element by the predetermined quantity towards the first position if the measured value is less than the threshold value;
- keeping the selector element in the position it was set at during the step of measuring if the measured value is equal to the threshold value.

In this manner, the detachment of excess seeds from the dispensing element is monitored throughout the entire process, from start to finish, thereby ensuring that the quality of the sowing operation, or rather, the dropping of only one seed at a time at pre-set distances is not influenced by possible seed variations due, for example, to the seed lot, or weather conditions.

According to the invention the method comprises a calibration step. Said step is to be done before sowing, for example, after introducing the granular material in the dispensing device.

The calibration step comprises the following sub-steps:
- via the actuator, positioning the selector element in the first position;
- starting up the dispensing element and generating a difference in pressure between the first and second compartments in order to cause the granular material to adhere to the opening of the dispensing element;
- via the sensor, measuring the quantity of granular material exiting the chamber in a certain time interval;
- comparing the measured quantity of granular material against a pre-set threshold value;
- moving the selector element by the predetermined quantity towards the second position if the measured value exceeds the threshold value;
- repeating the steps of measuring, comparing and moving until the measured value matches the threshold value.

As a result of such a solution, the device can self-calibrate autonomously, thereby speeding up pre-sowing operations and enabling excellent sowing quality from the very start.

Moreover, the invention provides a sowing machine having a tank able to contain granular material, and a granular material dispensing device contained in said tank.

### BRIEF DESCRIPTION OF DRAWINGS

Additional characteristics and advantages of the invention will be made clearer by the following description, given by way of example and not limitation, with the aid of the drawings in the annexed tables.
Figure 1 is a perspective exploded view of a dispensing device in accordance with the invention.
Figure 2 is a section view of the dispensing device as per figure 1 in a first operating position.
Figure 3 is a section view of the dispensing device as per figure 1 in a second operating position.
Figure 4 is a back view of the dispensing device as per figure 1.

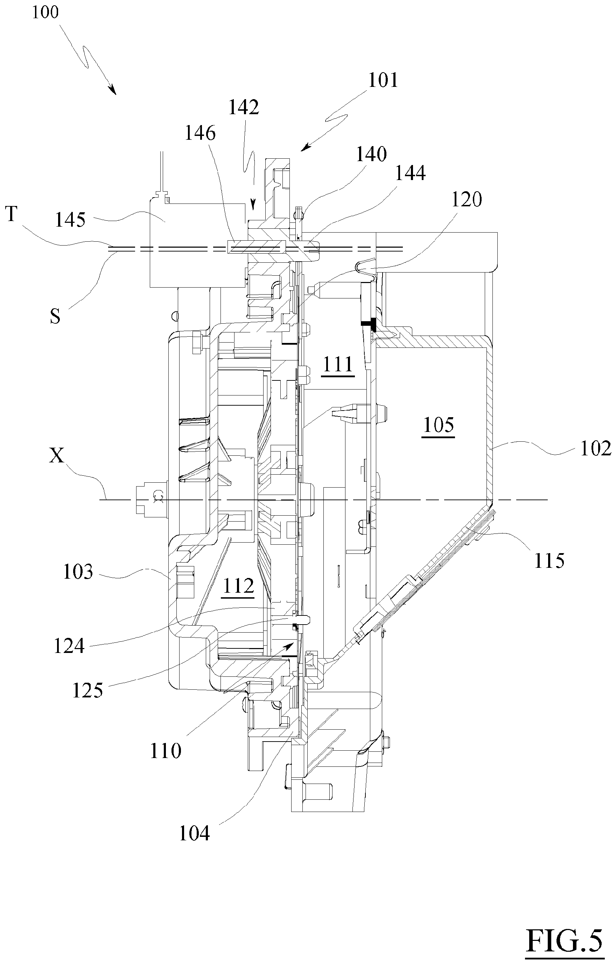

Figure 5 is a section view of the dispensing device as per figure 1 according to a section plane orthogonal to the section plane in figures 2 and 3.

### BEST MODE FOR CARRYING OUT THE INVENTION

With particular reference to these drawings, 100 is used to globally identify a dispensing device intended for implementation in a sowing machine for dispensing granular material, or rather, seeds.

The sowing machine, which can be self-propelled or tractor-mounted, comprises a supporting frame and a tank for containing the granular material, the tank being fixed to the supporting frame.

The dispensing device 100 is, in its turn, fixed to the supporting frame and is connected to the tank.

Said sowing machine additionally comprises at least one furrow-opening disc articulated to the supporting frame via, for example, at least one flexible element.

The dispensing device 100 comprises a casing 101, which is hollow internally and defines a chamber 110 in its interior.

The casing 101 is defined by a first half-shell 102 and a second half-shell 103, said half-shells being configured to be joined together in order to define chamber 110.

In particular, each half-shell 102,103 is defined by a substantially concave body and can be placed with the concave portion directed towards the other half-shell 102,103.

Moreover, each half-shell 102,103 comprises a perimeter flange 104 that can be coupled and fixed by suitable fixing means, which are in themselves known, to the perimeter flange 104' of the other half-shell 102,103, for example, via a gasket interposed between them.

In use, the casing 101 is capable of being fitted in a vertical position wherein the perimeter flanges 104 lie in a plane that is substantially parallel to the vertical axis.

Throughout this discussion, the words upper and lower will be used in reference to said position.

The first half-shell 102 comprises a loading hopper obtained in an upper portion of said half-shell and associated to a seed-containing tank (not represented for the sake of simplicity) for the entry of the seeds into the chamber 110, said tank overlying the device 100.

The loading hopper 105 is defined by a chute 115 facing towards the lower portion of the first half-shell 102.

The first half-shell 102 also comprises a lower protrusion capable of defining, in combination with an equivalent part in the second half-shell 103, an outlet channel 106 through which the granular material, or rather, the seeds, exit the chamber 110 towards the soil.

The outlet channel 106 is connected to a duct 106a, having an end distal from the chamber 110, to discharge the seed in a previously created furrow.

Moreover, the first half-shell 102 comprises a through hole, for example, obtained in an upper portion of the first half-shell 102 itself, for the entry of atmospheric air, which is sucked in via suitable pneumatic means that are in themselves known.

The through hole is advantageously connected, via a suitable tube, to a filter external to the casing 101 (these are not illustrated).

Moreover, the first half-shell 102 can comprise an additional opening closed with a perforated grating 107B, said opening enabling the passage of air between the inside and the outside of the chamber 110 (especially, the suction of air in chamber 110) during operation of the dispensing device 100.

The second half-shell 103 comprises an opening 108, for example made in a perimeter portion of the second half-shell 103 itself, to which a unit is connected in order to vary the pressure value inside the chamber 110.

In the embodiment described hereafter, the unit is a vacuum unit A that regulates the pressure value in chamber 110 to a value lower than the ambient pressure in order to create negative pressure in chamber 110.

In other embodiments of the invention, the unit regulates the pressure inside the chamber 110 to a pressure value higher than the ambient pressure value. The opening 108 is preferably made in a position such that it is distal to the outlet channel 106 when the two half-shells 102,103 are joined together and, in this way, the opening 108 itself and the outlet channel 106 are different and distinct from each other.

The dispensing device 100 comprises a dispensing element which can collect the material and transport it from the loading hopper 105 to the outlet channel 106.

The dispensing element comprises a dispensing disc 120, which, for example, lies in a plane parallel to the plane of the perimeter flanges 104,104'. Furthermore, the dispensing disc 120 is housed in the chamber 110, substantially at the perimeter flanges 104, 104', or rather, away from the bottom ends of the concavities of the half-shells 102,103.

The dispensing disc 120 features an extension in a radial direction, such that the edges of the dispensing disc 120 are substantially flush with the internal walls of the chamber 110.

In practice the dispensing disc 120 divides the chamber 110 into two compartments 111,112, a first compartment 111 being in communication with the loading hopper 105 and the outlet channel 106, and a second compartment 112 being in communication with the opening 108 and wherein the unit to vary the pressure value inside the chamber 110 generates a pressure variation. In particular, in the present embodiment the vacuum unit A generates a negative pressure inside the chamber 110 and, in particular, in the second compartment 112, so that a difference between the pressure values in the first and in the second compartment (111,112) is created.

The dispensing disc 120 is rotatably associated with the casing 101 in relation to an axis of rotation X, for example, coinciding with the dispensing disc itself. In particular, the dispensing disc 120 is coaxially connected to a rotating shaft 121 that protrudes from the casing 101, said casing being in its turn connected to suitable actuating means.

In the embodiment shown in the figures, the rotating shaft 121 protrudes from a central portion of the second half-shell 103.

The dispensing disc 120 is, for example, made from metal or plastic material. The dispensing disc 120 comprises at least one through hole which is eccentric to the axis of rotation X and capable of putting the first compartment 111 in communication with the second compartment 112.

Preferably, said opening comprises a series of first through holes 122, which are arranged in proximity to the edge of the dispensing disc 120 itself.

The first holes 122 are angularly equidistant from each other in relation to an angle having its vertex at the centre of the dispensing disc 120 and, for example, said holes being displaced at the same distance from the centre of the dispensing disc, or rather, from the axis of rotation X.

Moreover, the first holes 122 present a diameter that is smaller than the minimum size of a granular body of the granular material to be dispensed.

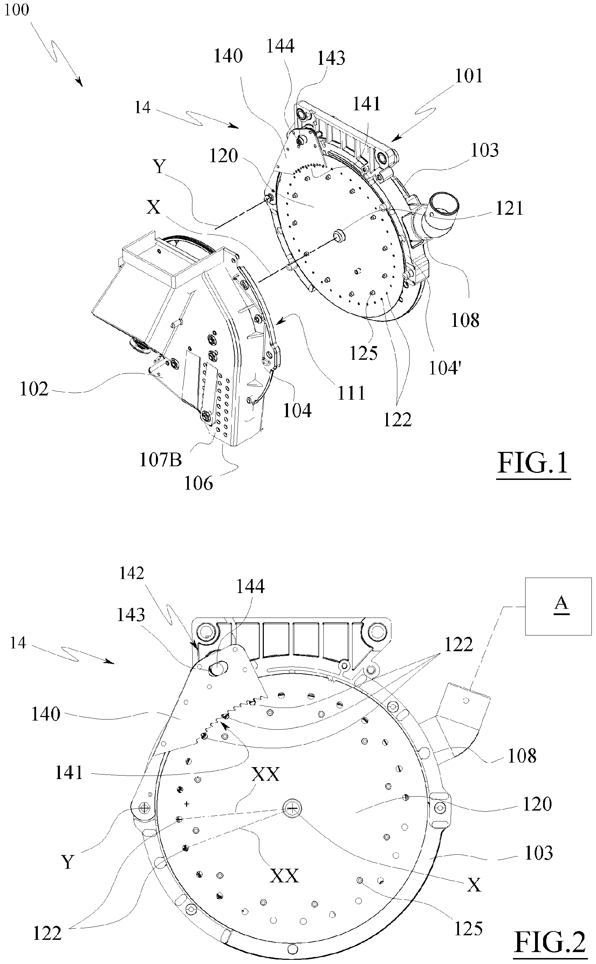

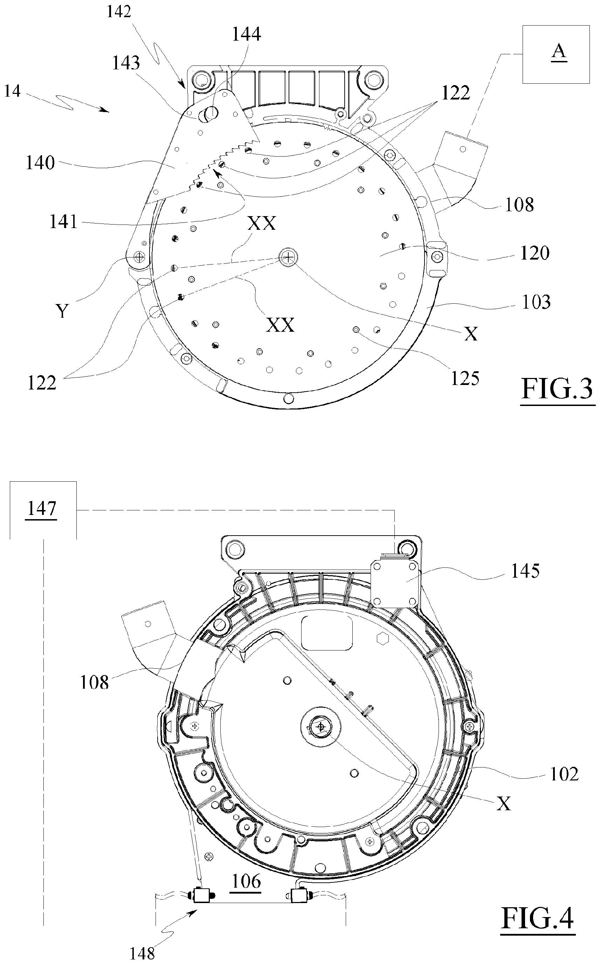

In practice, the centres of the first holes 122 lie equidistant from each other along an imaginary circumference having, as centre, the centre of the dispensing disc 120 and radius XX (see figures 2 and 3).

At least one first hole 122 overlaps a diversion duct (not represented for the sake of simplicity) for the air drawn by the vacuum unit A, said diversion duct being in communication with the opening 108 and provided in the second half-shell 103.

In particular, each first hole 122 is capable of overlapping the diversion duct when the dispensing disc 120 is rotating about the axis of rotation X.

The dispensing disc 120 is also provided with a series of second holes 123 disposed distal from the edge of the dispensing disc 120 in relation to the first holes 122.

Similarly, the second holes 123 are angularly equidistant from each other.

A drive plate 124 is interposed between the rotating shaft 121 and the dispensing disc, said drive plate rotating integrally with the rotating shaft 121 and comprising, for example, a spoke-like configuration, and having a plurality of protruding pegs 125. The pegs are disposed circumferentially along the direction parallel to the axis of rotation 121 and are capable of supporting the dispensing disc 120 and driving its rotation together with the drive plate 124.

In practice, the pegs 125 are capable of fitting into the second holes 123 of the dispensing disc 120, for example, with reduced backlash.

In particular, pegs 125 are capable of protruding from the dispensing disc 120 into the first compartment 111 of the chamber 110, or rather, towards the first half-shell 102.

The diameter of the drive plate 124 is smaller than the diameter of the dispensing disc 120 and, in particular, the first holes 122 of the dispensing disc 120 protrude beyond the perimeter edge of the drive plate 124.

The dispensing device 100 can also comprise a selector assembly 14 housed in the first compartment 111. The selector assembly is capable of detaching from the dispensing element, or rather, the dispensing disc 120, a quantity of granular material, or number of seeds, conveyed by the dispensing element that exceeds a predetermined threshold quantity.

In particular, the selector assembly 14 is configured to detach, from the dispensing disc 120, the seeds that are in excess of the single seed that each first hole 122 is configured to carry to the outlet 106.

The dispensing assembly 14 also comprises a seed selector element 140, which is positioned in proximity to a radial end of the dispensing disc 120 and has a portion that overlaps a radial peripheral portion of the dispensing disc 120 leaning out onto the first compartment 111 and external in relation to the opening, or rather, to the first holes 122.

The selector element 140 is shaped like a substantially flat body, for example, an elongated plate, disposed between the first and the second half-shell 102,103.

The selector element 140 preferably lies on a plane parallel to the lying plane of the dispensing disc.

The selector element 140 is hinged, for example, from one of its ends, to the casing 101.

Said hinge features a hinge axis Y, which is parallel to the axis of rotation X, and, for example, external to the dispensing disc 120.

The selector element 140 comprises a contact surface 141 of the granular material, this contact surface being directed towards the centre of the chamber 110, or rather, towards the axis of rotation X.

The contact surface 141 features a longitudinal extension that is greater than the distance between the two first holes 122, preferably features a longitudinal extension greater than double the distance between the two first holes 122. Said contact surface 141 preferably has a serrated edge.

In practice, the contact surface 141 is obtained in a side edge of the flat body. The selector assembly 14 comprises an actuator 142 configured to move the selector element 140 in any position between a first position and a second position. In the first position, the selector element 140, or rather, the contact surface 141, is far away from the opening, or rather, from the first holes 122; in the second position, a portion of the selector element 140, or rather, of the contact surface 141, at least partially overlaps the opening, or rather, overlaps at least one of the first holes 122.

In practice, in the first position the selector element 140, or rather, the contact surface 141, is radially external to the opening, or rather, the first holes 122. Moreover, the actuator 142 is configured to lock the selector element 140 in any position comprised between the first and the second position (including the two ends).

When it moves between the first and the second position, the selector element oscillates in relation to the hinge axis Y on a plane parallel to the lying plane of the dispensing element, or rather, the dispensing disc 120.

The actuator 142 comprises a through hole 143 with an elongated shape, or rather, with a slot shape. The through hole defines a longitudinal axis lying on a plane perpendicular to the rotation axis X and is obtained in the selector element 140 in a position that is eccentric to the hinge axis Y.

For example, said through hole 143 is obtained at an end of selector element 140 that is distal from the hinge axis Y, preferably proximal to the contact surface 141.

The actuator 142 is also provided with a pin 144 that is slidingly fitted into a through hole 143 along a sliding axis parallel to a longitudinal axis of the through hole 143 and perpendicular to a longitudinal axis S of the pin itself. Said pin 144 is driven by the actuator 142.

In particular, the actuator 142 comprises an electric motor 145 provided with an output shaft 146. The pin 144 is fixed to said output shaft and is disposed with the longitudinal axis S parallel and eccentric to an axis T of the output shaft 146.

Preferably, the axis of the output shaft 146 is eccentric, or rather, external, to the dispensing disc 120.

To actuate the selector element 140 from the first position to the second position, and vice versa, the output shaft 146 rotates about its axis T by 120° to 160° maximum; it preferably rotates about its axis T by 143° maximum. The axial ends of the through hole 143 define the extreme sliding positions of the pin 144, therefore, they define the first position and second position of the selector element 140.

For example, figure 3 shows the selector element 140 in the first position, wherein the pin 144 is in contact with an axial end of the through hole 143 distal from the hinge axis Y.

The actuator 142, or rather, the electric motor 145, is fixed to the casing 101. An alternative embodiment cannot be ruled out in which actuator 142 comprises a linear actuator in place of the electric motor 145 to actuate pin 144.

Selector assembly 14 comprises a control unit 147, configured to activate the electric motor 145, and a sensor 148 connected to the control unit 147 and configured to detect the quantity of granular material, or rather, the number of seeds, exiting from the chamber 110 in a pre-set time interval.

Said time interval is dependent on the rotation speed of the dispensing element.

In the illustrated embodiment, the time interval is dependent on the rotation speed of the dispensing disc 120 and on the distance between the two adjacent first holes 122.

In particular, the control unit 147 is configured to compare the number of seeds, as measured by the sensor 148, against a pre-set threshold value, for example 1, and activate the actuator 142 so that it moves the selector element 140 to the first position when the measured value is less than the threshold value, or to the second position when the measured value is greater than the threshold value.

The sensor 148 is preferably positioned at the outlet 106.

In an alternative embodiment of the invention, the sensor 148 is positioned in duct 106a connected downstream to outlet 106.

The sensor 148 comprises, for example, a photocell.

A method of operation of dispensing device 100, for example contained in a memory of the control unit 147, is described below.

To start, the granular material is introduced in the first compartment 111; afterwards, the unit to vary the pressure value inside the chamber 110 and the dispensing element, or rather, the dispensing disc 120, to transport the granular bodies from the inlet 105 to the outlet 106, are actuated.

Subsequently, the control unit 147, via the sensor 148, measures the quantity of granular material, or rather, the number of seeds, exiting the chamber 110 in a pre-set time interval and compares the measured quantity of granular material against a pre-set threshold value.

Such threshold value is, for example, equal to only one granular body, or rather, a single seed.

If the measured value of the quantity of granular material, or rather, of seeds, exceeds the threshold value, the control unit 147 activates the actuator 142 so that it moves the selector element 140 from the first position towards the second position.

For example, the movement from the first position to the second position, and vice versa, occurs in a time interval comprised between 1 and 50 complete revolutions of the dispensing element, preferably equal to 5 complete revolutions of the dispensing element.

If the measured value of the quantity of granular material, or rather, of seeds, is less than the threshold value, the control unit 147 activates the actuator 142 so that it moves the selector element 140 from the second position towards the first position.

If the measured value of the quantity of granular material is equal to the threshold value, the control unit 147 activates the actuator 142 so that it maintains the selector element 140 in the position reached.

Then the steps of measuring, comparing and moving the selector element 140 when the measured value differs from the threshold value are repeated, up to the deactivation of the dispensing element.

The above-described method of operation also comprises the step of performing an initial calibration of selector assembly 14.

The calibration step starts with the introduction of the granular material in the first compartment 111.

The selector element 140 is then moved to the first position via the actuator 142.

Afterwards, the unit to vary the pressure value inside the chamber 110 and the dispensing element, or rather, the dispensing disc 120, to transport the granular bodies from the inlet 105 to the outlet 106, are activated.

Once the transportation of the seeds has been activated, the control unit 147, via the sensor 148, measures the quantity of granular material, or rather, the number of seeds, exiting the chamber 110 in a pre-set time interval and compares the measured quantity of granular material against a pre-set threshold value.

If the measured value of the quantity of granular material, or rather, of granular bodies, exceeds the threshold value, the control unit 147 activates the actuator 142 so that it moves the selector element 140 towards the second position. At the same time, the quantity of material exiting the chamber 110 in the time interval is measured and the measured value is compared against the pre-set threshold value.

If the measured value is equal to the threshold value, the control unit 147 maintains the actuator 142 in the position reached.

The dispensing device 100 can now dispense the correct number of seeds at a time.

Otherwise, the control unit 147 activates the actuator 142 so that it moves the selector element 140 by the predetermined quantity towards the second position.

The steps of measuring, comparing and moving until the measured value matches the threshold value are then repeated.

The operation of the dispensing device 100 is as follows.

During operation of the sowing machine wherein the dispensing device 100 is implemented, the dispensing disc 120 is set in rotation in relation to the axis of rotation X; at the same time, the unit for varying the pressure value inside the chamber 110 creates a pressure difference between the first compartment 111 and the second compartment 112 of chamber 110.

In the illustrated embodiment, in particular, the vacuum unit A creates a negative pressure, in relation to the ambient pressure, in the second compartment 112.

As a result of the negative pressure created by vacuum unit A in chamber 110, the seeds contained in the first compartment 111 adhere to the dispensing disc 120 at the level of the first holes 122 and are dragged by it from the loading hopper 105 towards the outlet channel 106 (with rotation clockwise in relation to figures 1, 2 and 3).

During rotation of the dispensing disc 120, the contact surface 141 of the selector element 140 hits the seeds dragged by the dispensing disc itself in order to cause the detachment of the seeds that adhere to the dispensing disc 120 with a weaker adhesion force, or rather, of the seeds that adhere in proximity to, not at, the first holes 122. In that way, the number of seeds that adhere to each first hole 122 is restricted to one.

When a seed comes in proximity to the outlet channel 106, and, in particular, when the respective first hole 122 is at the diversion duct 109, the negative pressure that enables the seed to adhere to the surface of the dispensing disc 120 ceases to act on the seed, therefore, the seed falls by gravity into the outlet channel 106.

During the whole time, the control unit 147 compares the number of seeds that go across the outlet 106, as measured by sensor 148, against a threshold value contained in the memory of the control unit itself. On the basis of this comparison, the control unit activates the actuator 142 in order to position the selector element 140 so that only one seed at a time is dispensed.

The invention as thus conceived is susceptible to many other possible modifications and variations, all of which are within the scope of the inventive concept.

In addition, all details can be replaced by other technically equivalent elements.

In practice, the materials used, as well as the contingent shapes and dimensions, can be any, according to requirements, without departing from the scope of protection in the following claims.

## Claims

1. A dispensing device (100) that dispenses granular material and which comprises:
- a casing (101) that defines a chamber (110) having an inlet (105) and an outlet (106) for the granular material that is to be dispensed;
- a dispensing element (120), which is rotatably associated to the casing (101) in relation to an axis of rotation (X) and housed in the chamber (110) in such a way that a first compartment (111) wherein the material that is to be dispensed is contained and which is in communication with the inlet (105) and outlet (106) is defined in said chamber (110); said dispensing element (120) comprising an opening (122), which is eccentric in relation to the axis of rotation (X), that puts the first compartment (111) in communication with a second compartment (112) and to which a quantity of granular material adheres by way of a difference between the pressure values in the first and in the second compartment (111, 112);
- a selector assembly (14) housed in the first compartment (111) that comprises a selector element (140), which is hinged to the casing (101) in relation to a hinge axis (Y) parallel to the axis of rotation (X) and is movable between a first position, wherein the selector element (140) is far away from the opening (122), and a second position, wherein a portion of the selector element (140) at least partially overlaps the opening (122),
wherein the selector assembly (14) also comprises an actuator (142) and a control unit (147) configured to activate the actuator (142), wherein the actuator (142) is capable of placing the selector element (140) in any position between the first position and the second position, including the two extremes, driving a pin (144) that is slidingly fitted into a through hole (143) made in the selector element (140) and having an elongated cross-section, along a sliding axis parallel to a longitudinal axis of the through hole (143) and perpendicular to the axis of the hinge (Y), and wherein the actuator comprises an electric motor (145), an output shaft (146) of which rotates integrally with the pin (144) whose longitudinal axis (S) is disposed parallel and eccentric to an axis (T) of the output shaft (146).

2. Dispensing device (100) according to claim 1, wherein the control unit (147) is configured to activate the actuator (142) according to the signal generated by a sensor (148) capable of detecting the quantity of granular material exiting the chamber (110).

3. Dispensing device (100) according to claim 1, wherein the actuator (142) is rigidly connected to the casing (101).

4. Dispensing device (100) according to claim 1, wherein the selector element (140) is provided with a contact surface (141) of the granular material capable of overlapping the opening (122), which presents a serrated edge, at least partially.

5. Dispensing device (100) according to claim 2 wherein the sensor (148) comprises a photocell.

6. Dispensing device according to claim 1 comprising a unit (A) configured to generate a difference between the pressure values in the first and in the second compartment (111, 112).

7. Device according to claim 6, **characterised by** the fact that said unit (A) is a vacuum unit configured to generate a negative pressure in the second compartment (112) of the chamber (110).

8. Method of operation of a granular material dispensing device (100) according to claim 1 comprising the following steps:
- feeding the granular material in the dispensing device (100);
- starting up the dispensing element (120) and generating a difference in pressure between the first (111) and the second compartment (112) in order to cause the granular material to adhere to the opening (122) of the dispensing element (120);
- via a sensor (148), measuring the quantity of granular material exiting the chamber (110) in a certain time interval;
- comparing the measured quantity of granular material against a pre-set threshold value;
- moving the selector element (140) towards the second position if the measured value exceeds the threshold value;
- moving the selector element (140) towards the first position if the measured value is less than the threshold value;
- keeping the selector element (140) in the position that it was set at during the step of measuring if the measured value is equal to the threshold value,
wherein the method is provided with a calibration step comprising the sub-steps of:
- via the actuator (142), positioning the selector element (140) in the first position;
- starting up the dispensing element (120) and generating a difference in pressure between the first (111) and the second compartment (112) in order to cause the granular material to adhere to the opening (122) of the dispensing element (120);
- via the sensor (148), measuring the quantity of material exiting the chamber (110) in a certain time interval;
- comparing the measured quantity of granular material against a pre-set threshold value;
- moving the selector element (140) towards the second position if the measured value exceeds the threshold value;
- repeating the steps of measuring, comparing and moving until the measured value matches the threshold value.

9. A sowing machine comprising a tank capable of containing granular material and a dispensing device (100) of granular material contained in said tank in accordance with any one of the claims from 1 to 7.

## Patentansprüche

1. Ausgabevorrichtung (100), die granulares Material ausgibt und welche aufweist:
- ein Gehäuse (101), das eine Kammer (110) definiert, die einen Einlass (105) und einen Auslass (106) für das auszugebende granulare Material hat,
- ein Ausgabeelement (120), welches bezüglich einer Drehachse (X) drehbar mit dem Gehäuse (101) verbunden ist und in der Kammer (110) derart aufgenommen ist, dass ein erstes Abteil (111), worin das auszugebende Material enthalten ist und welches in Kommunikation mit dem Einlass (105) und dem Auslass (106) ist, in der Kammer (110) definiert ist, wobei das Ausgabeelement (120) eine Öffnung (122) aufweist, welche bezüglich der Drehachse (X) exzentrisch ist, die das erste Abteil (111) in Kommunikation mit einem zweiten Abteil (112) bringt und an welcher eine Quantität an granularem Material anhaftet mittels einer Differenz zwischen den Druckwerten in dem ersten und dem zweiten Abteil (111, 112),
- eine in dem ersten Abteil (111) aufgenommene Auswahleinrichtung (14), die ein Auswahlelement (140) aufweist, das an dem Gehäuse (101) bezüglich einer Gelenkachse (Y), die parallel zu der Drehachse (X) ist, gelenkangebracht ist und bewegbar ist zwischen einer ersten Position, in welcher das Auswahlelement (140) weit entfernt von der Öffnung (122) ist, und einer zweiten Position, in welcher das Auswahlelement (140) die Öffnung (122) wenigstens teilweise überlappt,
wobei das Auswahlelement (14) ferner einen Aktuator (142) und eine Steuereinheit (147) aufweist, die konfiguriert ist, um den Aktuator (142) zu aktivieren, wobei der Aktuator (142) imstande ist, das Auswahlelement (140) in irgendeine Position zwischen der ersten Position und der zweiten Position, einschließlich der beiden Endpositionen, zu platzieren, antreibend einen Stift (144), der in ein Durchgangsloch (143), das im Auswahlelement (140) ausgebildet ist und einen langgestreckten Querschnitt hat, verschiebbar eingesetzt ist entlang einer Verschiebeachse parallel zu einer Längsachse des Durchgangslochs (143) und senkrecht zu der Gelenkachse (Y), und wobei der Aktuator einen Elektromotor (145) aufweist, von welchem eine Ausgangswelle (146) integral mit dem Stift (144) rotiert, dessen Längsachse (S) parallel und exzentrisch zu einer Achse (T) der Ausgangswelle (146) angeordnet ist.

2. Ausgabevorrichtung (100) gemäß Anspruch 1, wobei die Steuereinheit (147) konfiguriert ist, um den Aktuator (142) gemäß dem Signal zu aktivieren, das von einem Sensor (148) erzeugt wird, der imstande ist, die Quantität an granularem Material, das die Kammer (110) verlässt, zu erfassen.

3. Ausgabevorrichtung (100) gemäß Anspruch 1, wobei der Aktuator (142) mit dem Gehäuse (101) starr verbunden ist.

4. Ausgabevorrichtung (100) gemäß Anspruch 1, wobei das Auswahlelement (140) mit einer Kontaktfläche (141), welche einen gezahnten Rand hat, für das granulare Material bereitgestellt ist, die imstande ist, die Öffnung (122) zumindest teilweise zu überlappen.

5. Ausgabevorrichtung (100) gemäß Anspruch 2, wobei der Sensor (148) eine Fotozelle aufweist.

6. Ausgabevorrichtung gemäß Anspruch 1, aufweisend eine Einheit (A), die konfiguriert ist, um eine Differenz zwischen den Druckwerten in dem ersten und in dem zweiten Abteil (111, 112) zu erzeugen.

7. Vorrichtung gemäß Anspruch 6, **gekennzeichnet durch** den Fakt, dass die Einheit (A) eine Vakuumeinheit ist, um einen Unterdruck in dem zweiten Abteil (112) der Kammer (110) zu erzeugen.

8. Verfahren zum Betrieb einer granulares-Material-Ausgabevorrichtung (100) gemäß Anspruch 1, aufweisend die folgenden Schritte:
- Zuführen des granularen Materials in die Ausgabevorrichtung (100),
- Starten des Ausgabeelements (120) und Erzeugen einer Druckdifferenz zwischen dem ersten (111) und dem zweiten Abteil (112), um zu bewirken, dass das granulare Material an der Öffnung (122) des Ausgabeelements (120) anhaftet,
- Messen, anhand eines Sensors (148), der Quantität an granularem Material, das die Kammer (110) verlässt in einem bestimmten Zeitintervall,
- Vergleichen der gemessenen Quantität an granularem Material mit einem vorbestimmten Grenzwert,
- Bewegen des Auswahlelements (140) zu der zweiten Position hin, falls der gemessene Wert den Grenzwert übersteigt,
- Bewegen des Auswahlelements (140) zu der ersten Position hin, falls der gemessene Wert kleiner als der Grenzwert ist,
- Halten des Auswahlelements (140) in der Position, an der es gesetzt war während des Schritts des Messens, falls der gemessene Wert gleich dem Grenzwert ist,
wobei das Verfahren bereitgestellt ist mit einem Kalibrierschritt, der die folgenden Unterschritte aufweist:
- Positionieren, anhand des Aktuators (142), des Auswahlelements (140) in der ersten Position,
- Starten des Ausgabeelements (120) und Erzeugen eines Druckunterschieds zwischen dem ersten (111) und dem zweiten Abteil (112), um zu bewirken, dass das granulare Material an der Öffnung (122) des Ausgabeelements (120) anhaftet,
- Messen, anhand des Sensors (148), der Quantität an Material, das die Kammer (110) verlässt in einem bestimmten Zeitintervall,
- Vergleichen der gemessenen Quantität an granularem Material mit einem vorbestimmten Grenzwert,
- Bewegen des Auswahlelements (140) zu der zweiten Position hin, falls der gemessene Wert den Grenzwert übersteigt,
- Wiederholen der Schritte des Messens, Vergleichens und Bewegens, bis der gemessene Wert mit dem Grenzwert übereinstimmt.

9. Sämaschine mit einem Tank, der imstande ist granulares Material zu enthalten, und einer Ausgabevorrichtung (100) für granulares Material, das in dem Tank enthalten ist, gemäß irgendeinem der Ansprüche 1 bis 7.

## Revendications

1. Dispositif de distribution (100) qui distribue un matériau granulaire et qui comprend :
- un boîtier (101) qui définit une chambre (110) ayant une entrée (105) et une sortie (106) pour le matériau granulaire qui doit être distribué ;
- un élément de distribution (120), qui est associé de manière rotative au boîtier (101) par rapport à un axe de rotation (X) et logé dans la chambre (110) de telle sorte qu'un premier compartiment (111) dans lequel le matériau qui doit être distribué est contenu et qui est en communication avec l'entrée (105) et la sortie (106) est défini dans ladite chambre (110) ; ledit élément de distribution (120) comprenant une ouverture (122), qui est excentrique par rapport à l'axe de rotation (X), qui met le premier compartiment (111) en communication avec un second compartiment (112) et laquelle une quantité de matériau granulaire adhère au moyen d'une différence entre les valeurs de pression dans le premier et dans le second compartiment (111, 112) ;
- un ensemble de sélection (14) logé dans le premier compartiment (111) qui comprend un élément de sélection (140), qui est articulé sur le boîtier (101) par rapport à un axe d'articulation (Y) parallèle à l'axe de rotation (X) et est mobile entre une première position, dans laquelle l'élément de sélection (140) est à l'écart de l'ouverture (122), et une seconde position, dans laquelle une partie de l'élément de sélection (140) chevauche au moins partiellement l'ouverture (122),
dans lequel l'ensemble de sélection (14) comprend également un actionneur (142) et une unité de commande (147) configurée pour activer l'actionneur (142), dans lequel l'actionneur (142) est capable de placer l'élément de sélection (140) dans n'importe quelle position entre la première position et la seconde position, y compris les deux extrêmes, en entraînant une broche (144) qui est ajustée de manière coulissante dans un trou traversant (143) réalisé dans l'élément de sélection (140) et ayant une section transversale allongée, le long d'un axe de coulissement parallèle à un axe longitudinal du trou traversant (143) et perpendiculaire à l'axe de l'articulation (Y), et dans lequel l'actionneur comprend un moteur électrique (145), dont un arbre de sortie (146) tourne d'un seul tenant avec la broche (144) dont l'axe longitudinal (S) est disposé parallèlement et excentrique par rapport à un axe (T) de l'arbre de sortie (146).

2. Dispositif de distribution (100) selon la revendication 1, dans lequel l'unité de commande (147) est configurée pour activer l'actionneur (142) en fonction du signal généré par un capteur (148) capable de détecter la quantité de matériau granulaire sortant de la chambre (110).

3. Dispositif de distribution (100) selon la revendication 1, dans lequel l'actionneur (142) est relié de manière rigide au boîtier (101).

4. Dispositif de distribution (100) selon la revendication 1, dans lequel l'élément de sélection (140) est muni d'une surface de contact (141) du matériau granulaire capable de chevaucher l'ouverture (122), qui présente un bord dentelé, au moins partiellement.

5. Dispositif de distribution (100) selon la revendication 2, dans lequel le capteur (148) comprend une cellule photoélectrique.

6. Dispositif de distribution selon la revendication 1, comprenant une unité (A) configurée pour générer une différence entre les valeurs de pression dans le premier et dans le second compartiment (111, 112).

7. Dispositif selon la revendication 6, **caractérisé par le fait que** ladite unité (A) est une unité à vide configurée pour générer une pression négative dans le second compartiment (112) de la chambre (110).

8. Procédé de fonctionnement d'un dispositif de distribution de matériau granulaire (100) selon la revendication 1, comprenant les étapes suivantes consistant à :
- alimenter le matériau granulaire dans le dispositif de distribution (100) ;
- démarrer l'élément de distribution (120) et la générer une différence de pression entre le premier (111) et le second compartiment (112) afin d'amener le matériau granulaire à adhérer à l'ouverture (122) de l'élément de distribution (120) ;
- par l'intermédiaire d'un capteur (148), mesurer la quantité de matériau granulaire sortant de la chambre (110) dans un certain intervalle de temps ;
- comparer la quantité mesurée de matériau granulaire à une valeur de seuil préétablie ;
- déplacer l'élément de sélection (140) vers la seconde position si la valeur mesurée dépasse la valeur de seuil ;
- déplacer l'élément de sélection (140) vers la première position si la valeur mesurée est inférieure à la valeur de seuil ;
- maintenir l'élément de sélection (140) dans la position dans laquelle il a été réglé pendant l'étape de mesure si la valeur mesurée est égale à la valeur de seuil,
dans lequel le procédé est muni d'une étape d'étalonnage comprenant les sous-étapes consistant à :
- par l'intermédiaire de l'actionneur (142), positionner l'élément de sélection (140) dans la première position ;
- démarrer l'élément de distribution (120) et la générer une différence de pression entre le premier (111) et le second compartiment (112) afin d'amener le matériau granulaire à adhérer à l'ouverture (122) de l'élément de distribution (120) ;
- par l'intermédiaire du capteur (148), mesurer la quantité de matériau sortant de la chambre (110) dans un certain intervalle de temps ;
- comparer la quantité mesurée de matériau granulaire à une valeur de seuil préétablie ;
- déplacer l'élément de sélection (140) vers la seconde position si la valeur mesurée dépasse la valeur de seuil ;
- répéter les étapes de mesure, de comparaison et de déplacement jusqu'à ce que la valeur mesurée corresponde à la valeur de seuil.

9. Semoir comprenant un réservoir capable de contenir un matériau granulaire et un dispositif de distribution (100) de matériau granulaire contenu dans ledit réservoir selon l'une quelconque des revendications 1 à 7.
